# EUROPEAN PATENT APPLICATION

(11) **EP 3 462 050 A1**
(43) Date of publication of application: **03.04.2019**
(21) Application number: 18197346.2
(22) Date of filing: 27.09.2018
(51) Int. Cl.: F16D 3/38

(54) **A CONNECTION YOKE THAT FACILITATES THE SCREWING OF CONNECTION BOLTS OF CARDAN SHAFT**

(30) Priority: 28.09.2017 TR 201714521
(71) Applicant: Tirsan Kardan Sanayi Ve Ticaret Anonim Sirketi, 45030 Manisa (TR)
(72) Inventor: DAVAZLI, Sebahattin, MANISA (TR); ÖZGÜRLER, Hüseyin, MANISA (TR); ÖZGÜR, Olmez, Tekirdag (TR)
(74) Representative: Yamankaradeniz, Kemal

(57) **Abstract**

A connection yoke (20) that facilitates screwing process of connection elements (60) on the cardan shaft (10). The yoke surface (21) has such an inclination that it prevents contact with a screw set (50) used for screwing the connection elements (60) which fix the yoke (20) to a cardan shaft (10). A distance (25) is present between yoke surface (21) and screw set (50).

## Description

### Technical Field

The invention relates to the cardan shaft's connection yoke.

The invention relates in particular to the form configuration that is implemented on the connection yoke in order to facilitate the operation of screw set that is used during screwing of the connection bolts during the assembly of cardan shaft to the vehicle.

### Prior Art

Cardan shaft is the machine element that enables the transmission of movement originated from output shaft of the transmission to the differential and to the wheels through the differential. The cardan shaft gets movement from the gearbox and transfer it to the other transmission organs over the joint.

Contact of the screw set that performs the screwing operation to the side surface of the flange of connection yoke because of the joint angle during the assembly of the cardan shaft to the vehicle make the screwing of the connection elements (bolts) and assembly of cardan shaft to the vehicle difficult.

### Purpose of the Invention

The invention relates to new form of connection yoke, which brings about a new approach to the field, which eliminates the technical problems experienced in the prior art.

An important objective of this invention is to eliminate the assembly difficulties that occur during the assembly of the cardan shaft to the vehicle. In order to achieve this purpose, the connection yoke flange side angle is optimized to meet the flange side for strength requirements.

Another objective of the invention is to obtain weight gain by reducing the weight of the pieces through the new form implemented on connecting yoke.

The structural, characteristic features, operating principle and advantages of the invention will be more clearly understood from the following figures below and the detailed description which is written with referring these figures. For this reason, evaluation should be performed according to these figures and detailed description.

### Brief Description of the Figures

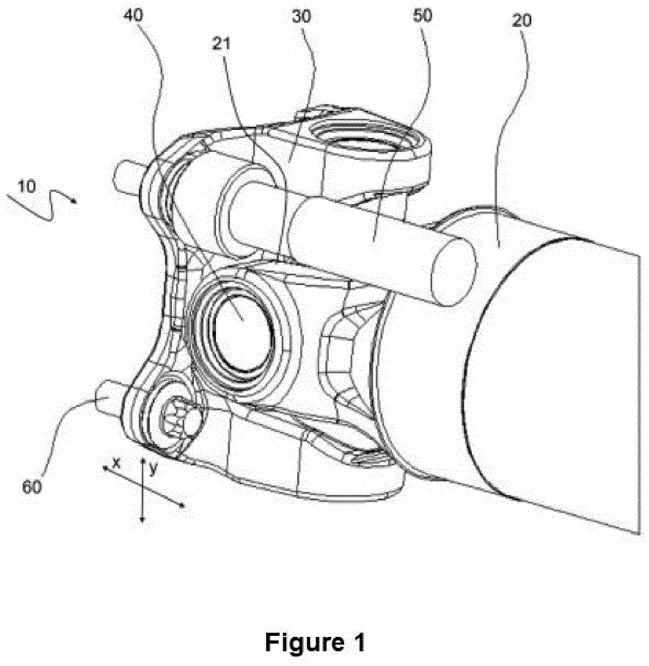

- Figure 1.: Complete perspective illustration of the cardan shaft connection yoke and the screw set with the connection elements (bolt).
- Figure 2.: Two dimensional side profile of the screw set in screwing position.
- Figure 3.: Two dimensional side view of a low-angle connection yoke surface.
- Figure 4.: Two dimensional side view of a high-angle connection yoke surface of the prior art.

### Reference Numbers

- 10.: Cardan Shaft
- 20.: Connection yoke
21. Yoke surface
22. Low Angle
23. High Angle
24. Contact Surface
25. Wide Distance
- 30.: Flange
- 40.: Universal Joint
- 50.: Screw Set
- 60.: Connection element (bolt)

### Detailed Description of the Invention

The cardan shaft (10) is the machine element which transmits the movement it takes from the transmission output shaft to the wheels through the differential. Aforementioned cardan shaft (10) is fixed to the vehicle by a connection element (60). Aforementioned connection element (60) is a bolt; after which, is passed through the holes on the flange (30), it allows the cardan shaft (10) can be mounted by a screw set (50) through torquing.

Universal joint (40) with the bed structure in its frame and its geometry enables the joint movement of connection yoke (20) and thus cardan shaft (10) as much as allowed by form of flange (30).

The flange (30) allows the fixing of the cardan shaft (10) to the transmission and/or differential side.

The connection yoke (20) is a detail part which is assembled to the pipe of the cardan shaft (10) with welding and, which forms the joint structure by be combined with the flange (30) with the help of universal joint (40).

The present invention is a connection yoke (20) that facilitates the screwing process of connection elements (60) by screw set (50) and that provides a non-contact operation and rotation space for screw set (50), which harbors a yoke surface (21) with low angle (22) that prevents the aforementioned screw set's (50) contact to the connection yoke (20).

The screw set (50) grips the connection elements (60) and applies the tightening torque. While the screw set (50) applies the tightening torque, it approaches to the surface of connection yoke (21) due to the joint angle. Since yoke surface (21) on the connection yoke (20) is at a lower angle (22) compared to the form of the old connecting fork side surface, which causes assembly difficulties, it enables an easier screwing process without assembly difficulties by enabling the screw set (50) can be operated without touching the contact surface (24).

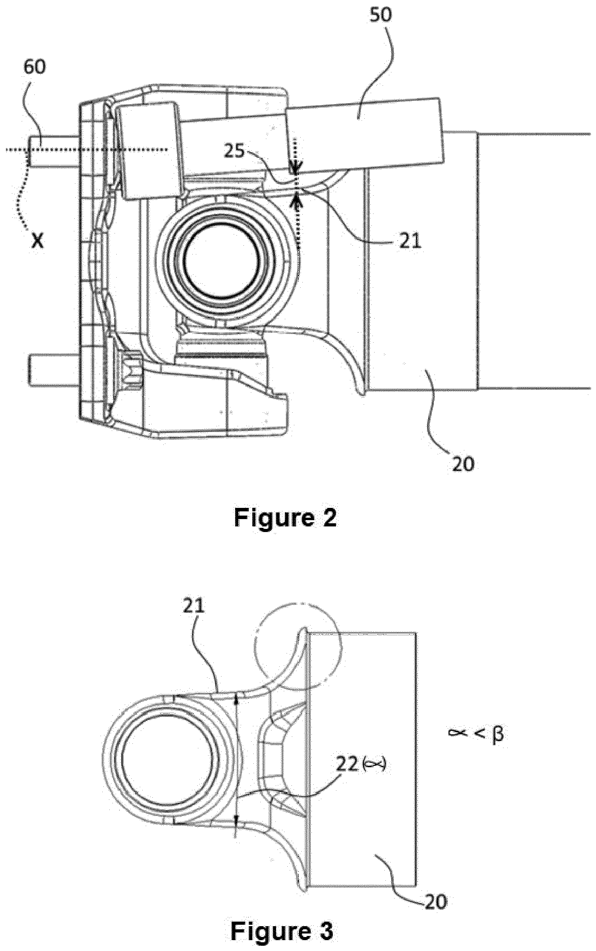

In Figure 2, the two-dimensional view of the screw set (50) while in screwing position of connection element (60) is illustrated. The operating range of the aforementioned screw set (50) and the yoke surface (21) comprises a wide distance (25) relative to the prior art. The connecting element (60) is in the full linear axis as compared to the x axis. However, already all screw sets (50) are able to adjust themselves with a slight angle to the x-axis by sensing the standing angle of the connection element (60) for removing from the yoke surface (21) and to provide comfortable screwing. With the yoke surface (21) comprising the low angle (22), the screw set (50) is removed from the yoke surface (21) and a operating range with a wide distance (25) is provided.

In Figure 3, two dimensional side view of the yoke surface (21) of the connection yoke (20) with low angle (22) is illustrated. Thanks to low angle (22) containing yoke surface (21), the screw set (50) ensured to be operated comfortably during assembly.

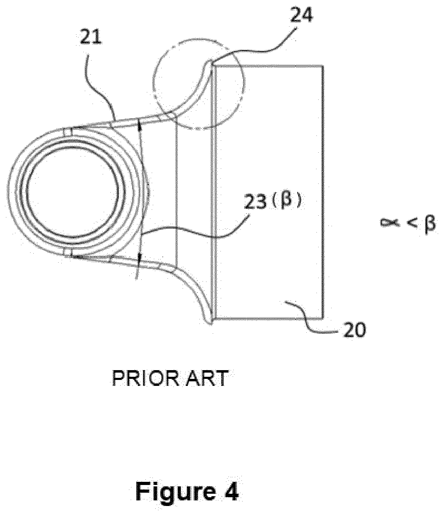

In Figure 4; the close-up view of the high angle containing (23) connection yoke surface (21) of the prior art is illustrated. Since the yoke surface (21) comprises a high angle (23), the screw set (50) is in contact with the contact surface (24). Since this contact does not harbor a comfortable operating range, a healthy tightening process cannot be performed. Therefore, it forms an obstacle against mass production and production quality.

## Claims

1. A connection yoke (20) that facilitates screwing process of connection elements (60) on the cardan shaft (10) with screwing set (50) and that provides a non-contact operation and rotation opportunity for the connection yoke (20), **wherein;**
- aforementioned screw set (50) has a low angle (22) yoke surface (21) which prevents its contact with connection yoke (20).

2. A connection yoke (20) according to Claim 1, **wherein;** operating range between screw set (50) and yoke surface (21) have wide distance (25).
